# FASCICULE DE BREVET EUROPEEN

(11) **EP 3 564 459 B1**
(45) Date de publication et mention de la délivrance du brevet: **17.12.2025**
(21) Numéro de dépôt: 19171649.7
(22) Date de dépôt: 29.04.2019
(51) Int. Cl.: A01G 9/033, E04D 11/00, A01G 9/02, B21D 47/00, B29D 99/00, B31D 3/02, B32B 3/12, E04C 2/36, E04D 11/02, E04D 13/04

(54) **PIÈCE COMPOSITE CONSTITUÉE DE DEUX MODULES À STRUCTURE ALVÉOLAIRE ET PROCÉDÉ DE CONDITIONNEMENT**
ZUSAMMENGESETZTES TEIL BESTEHEND AUS ZWEI MODULEN MIT WABENSTRUKTUR UND KONDITIONIERUNGSPROZESS
COMPOSITE ELEMENT MADE OF TWO HONEYCOMB STRUCTURE MODULES AND CONDITIONING PROCESS

(30) Priorité: 27.04.2018 FR 1853712
(43) Date de publication de la demande: 06.11.2019
(73) Titulaire: SOPREMA (SAS), 67100 Strasbourg (FR)
(72) Inventeur: BINDSCHEDLER, Pierre-Etienne, 67000 Strasbourg (FR); BEYER, Christophe, 67210 BERNARDSWILLER (FR); BOISSENIN, Francis, 67100 STRASBOURG (FR)
(74) Mandataire: Ipsilon

(56) Documents cités:
- EP-A1- 2 687 630
- EP-A1- 3 483 338
- WO-A1-2017/050304
- FR-A1- 2 314 982
- FR-A1- 2 516 125
- US-A- 2 815 795
- US-A- 3 407 110
- US-A- 4 111 585
- US-A- 4 785 604
- US-B1- 6 266 921
- SLUTZ: "Retentio - Proc�d� d'�tanch�it� pour toitures-terrasses � retenue temporaire d'eaux pluviales", CPP N� DT-13/036_FR CE, 22 June 2013 (2013-06-22), XP055525939, Retrieved from the Internet <URL:https://lotus.soprema.fr/www/reftechsop.nsf/($AllByUNID)/76CBC98476117597C1257BFD002A31D7/$File/CPP%20DT%20N�13.036_FR%20RETENTIO.pdf> [retrieved on 20181122]

## Description

La présente invention concerne le domaine des systèmes et équipements de BTP, notamment les ouvrages du type toiture-terrasse, circulables ou non, du type toitures végétalisées, ou encore du type dalles sur plots, et a pour objets une pièce composite formée de modules à structure alvéolaire et un procédé de conditionnement de tels modules.

Les modules en forme de panneaux ou de plaques à structure alvéolaire ultra-légère (couramment dénommés « SAUL ») sont déjà largement connus pour des applications dans le bâtiment, les aménagements paysagers, les surfaces circulables ou analogues.

En effet, ces panneaux ou plaques structuré(e)s en nid d'abeilles permettent de constituer des couches intermédiaires combinant : création d'un grand volume vide, forte résistance à la compression (dans une direction perpendiculaire aux faces de la plaque, c'est-à-dire dans la direction des axes des alvéoles), et légèreté.

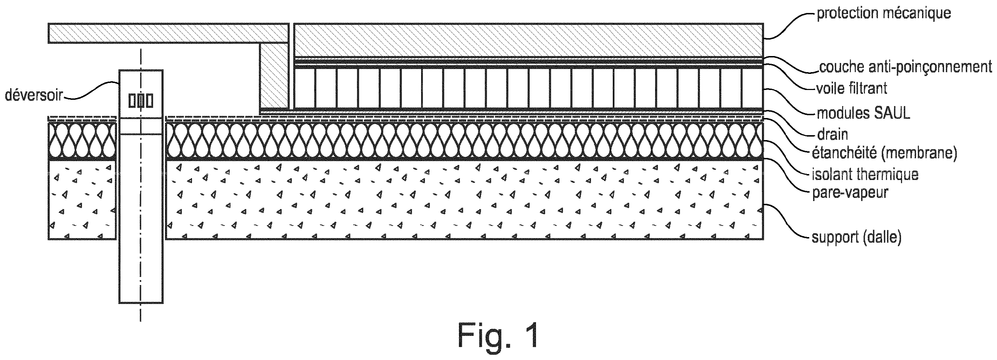

A titre d'exemple d'application, et comme représenté schématiquement en coupe sur la figure 1 dans un contexte de toiture-terrasse, on peut citer le système dénommé « Rétentio » (marque déposée) de la demanderesse, qui comprend d'une part un module en structure alvéolaire ultra-légère (SAUL), et d'autre par un drain horizontal, associés généralement à un géotextile, lorsque le système est revêtu (couche de protection surfacique).

Dans ce cas, le produit alvéolaire est principalement utilisé pour créer un volume de vide entre une étanchéité et un revêtement, porteur ou non (végétalisation, chape ciment, pavés ou dalles, etc.)

Généralement, les modules précités sont utilisés dans le bâtiment, soit pour aligner deux niveaux de construction sans créer de surcharge, soit pour permettre d'utiliser le volume vide pour le stockage temporaire des eaux pluviales, en toiture ou en stockage enterré.

Il est aussi d'usage courant que ces modules à structure alvéolaire en faible épaisseur servent à la stabilisation de gravier pour des ouvrages circulables ou non, en toiture ou pour toute utilisation paysagère.

De tels modules à structure en nid d'abeilles sont actuellement obtenus par thermoformage et collage, extrusion ou injection.

Toutefois, compte tenu de leur structure même, un des inconvénients majeurs de ces modules à structure alvéolaire est leur encombrement important (avec un vide pouvant être supérieur à 95 %) au moment de leur conditionnement et de leur transport, ce qui génère des coûts de mise en œuvre élevés de ce seul fait.

Un exemple de pièce composite constituée de deux modules imbriqués est décrit dans US 4 785 604 A.

En outre, dans une mise en œuvre en tant que couche drainante et/ou de rétention d'eau, il faut obligatoirement associer à ces modules un moyen de drainage particulier additionnel.

La présente invention a pour but de pallier ces inconvénients par la proposition d'une solution simple, peu onéreuse, ne compromettant pas les caractéristiques et propriétés essentielles de ces modules et ne remettant pas en cause leur mode de fabrication.

Ce but est atteint par une pièce composite présentant les caractéristiques de la revendication 1 et par un procédé de conditionnement présentant les caractéristiques de la revendication 10.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 2 est une vue en perspective d'un module à structure alvéolaire en nid d'abeilles formant partie d'une pièce composite selon un premier mode de réalisation de l'invention ;
la figure 3 est une vue partielle en élévation latérale et à une échelle différente du module de la figure 2 ;
la figure 4 est une vue de dessus de deux modules tels que représentés figure 2, mutuellement imbriqués l'un dans l'autre et formant une pièce composite en accord avec l'invention (configuration de stockage/transport) ;
la figure 5 est une vue en perspective de deux modules de la figure 2 aboutants et partiellement emboîtés d'un dans l'autre avec ajustement au niveau de leurs extrémités de formes complémentaires ;
les figures 6A et 6B sont des vues en perspective de deux modules selon la figure 2 recouverts d'une portion de voile ou d'une couche analogue, respectivement avant et après assemblage par aboutement desdits modules ;
la figure 7 est une vue en perspective d'un module à structure alvéolaire en nid d'abeilles formant partie d'une pièce composite selon un deuxième mode de réalisation de l'invention ;
la figure 8 est une vue en perspective d'une variante de réalisation du module de la figure 7 (dans une position retournée par rapport à la figure 7) ;
la figure 9 est une vue en perspective montrant deux modules selon la figure 8, en cours d'assemblage avec imbrication l'un avec l'autre, pour former une pièce composite en accord avec l'invention ;
la figure 10 est une vue en perspective d'un module selon la figure 7 ou 8, équipé de moyens de support ou d'espacement, tels que des entretoises de piétage en forme de piliers emboîtées dans des alvéoles du module ;
la figure 11 est une vue éclatée en perspective illustrant l'association de deux modules selon la figure 7 ou 8 avec une entretoise ou un distanceur tel(le) que représenté(e) figure 10 ;
la figure 12 est une vue en coupe d'un système de toiture, similaire à celle de la figure 1, le système comprenant une couche de modules formant parties d'une pièce composite selon l'invention ;
les figures 13A et 13B sont des vues respectivement en perspective (13A) et de dessus (13B) d'un module à structure alvéolaire en nid d'abeilles formant partie d'une pièce composite selon un troisième mode de réalisation de l'invention ;
les figures 14A et 14B sont des vues en perspective, respectivement d'ensemble (14A) et partielle de détail (14B), de deux modules selon les figures 13A et 13B, en cours d'assemblage avec imbrication mutuelle, et,
les figures 15A et 15B sont des vues en perspective, respectivement d'ensemble (15A) et partielle de détail (15B), d'une pièce composite selon l'invention obtenue après imbrication complète des deux modules représentés figures 14A et 14B.

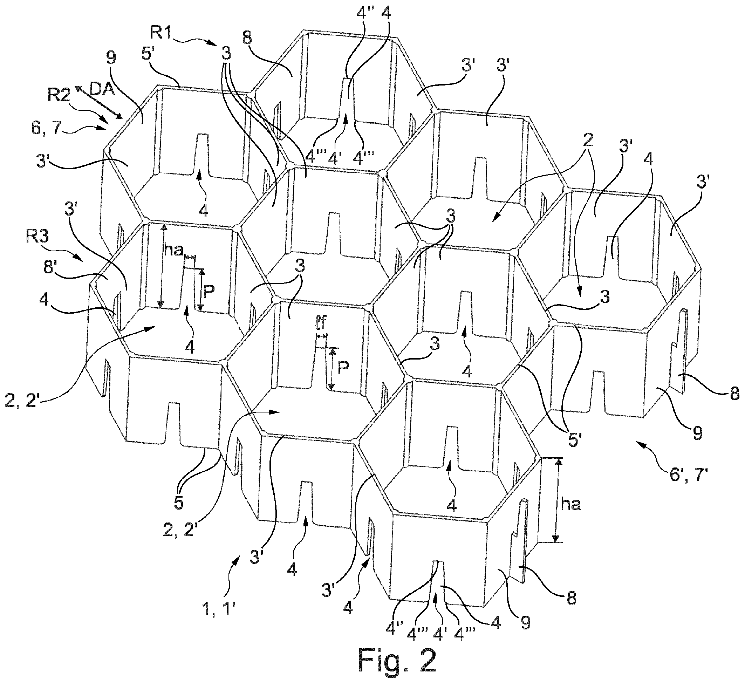

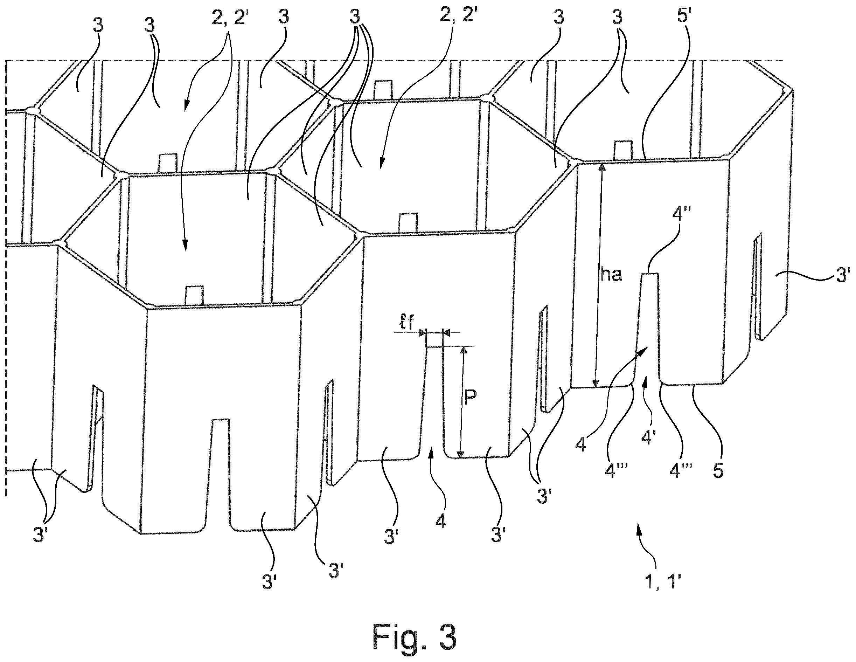

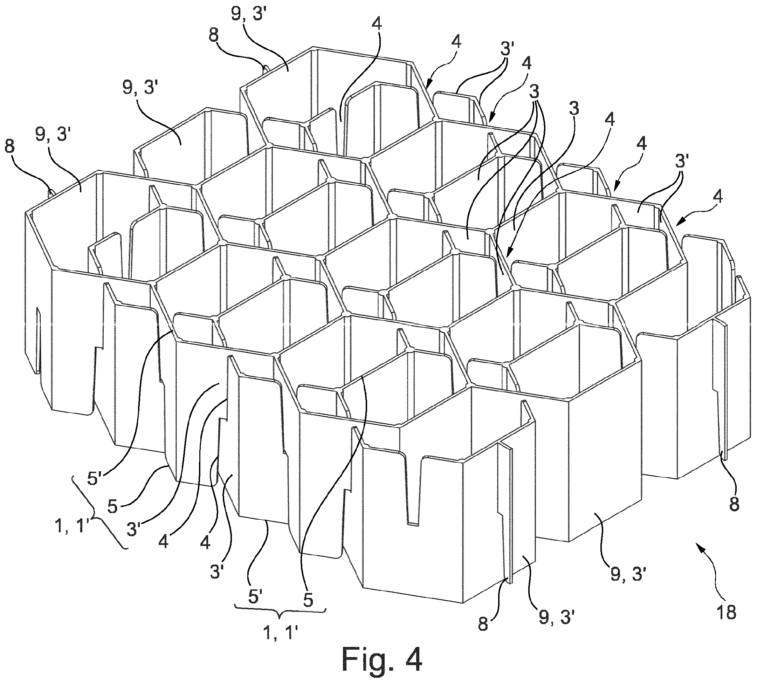

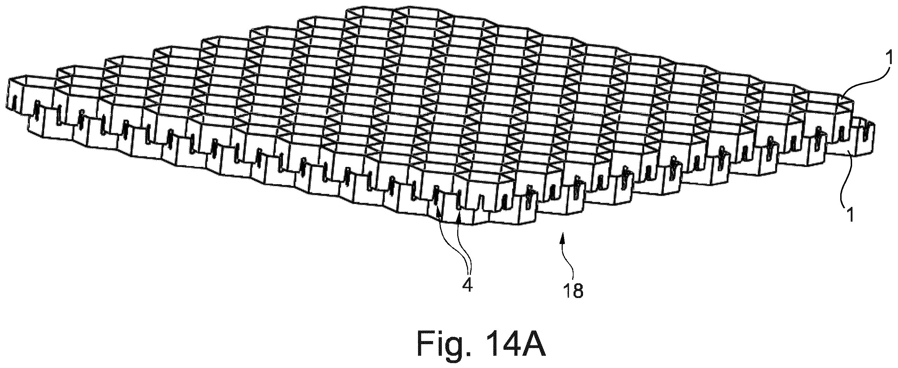

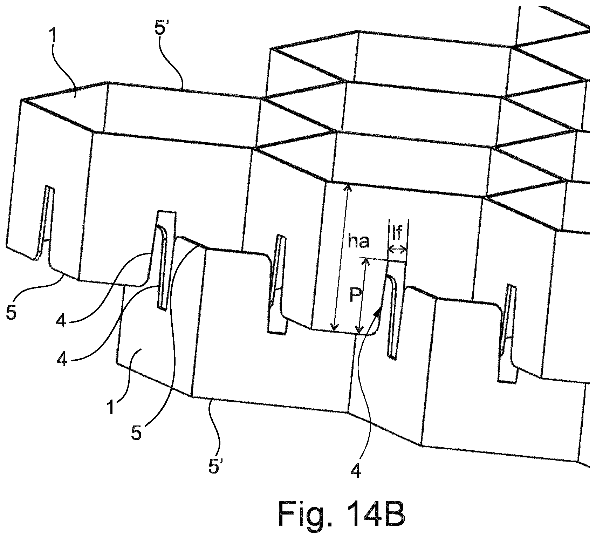

Comme le montrent les figures 4, 9 et 15, et partiellement les figures 2, 3, 4 à 8 et 12 à 14, l'invention vise en premier lieu une pièce composite (18) constituée de deux modules 1 à structure alvéolaire, notamment en nid d'abeilles, chaque module (1) consistant en un corps, préférentiellement monobloc, en forme de plaque grillagée 1' à mailles tubulaires 2 identiques et mutuellement accolées, constituant autant d'alvéoles, lesdites alvéoles 2 présentant une forme polyédrique avec une section polygonale, et des parois latérales 3,3' de hauteur ha.

Au moins certaines des parois latérales 3, 3' des alvéoles 2, communes à deux alvéoles 2 (parois non périphériques 3) ou non (parois 3' périphériques), comportent des découpes 4 en forme de fentes s'étendant depuis une face 5 de la plaque 1' jusqu'à au moins mi-hauteur de la paroi 3, 3' concernée.

La profondeur P des fentes 4 se situe autour de ha/2, en étant préférentiellement égale ou légèrement supérieure à ha/2 (par exemple de 0,5 à 1 millimètre environ pour une hauteur ha de 30 à 50 mm).

De plus, ces fentes 4 sont configurées et agencées pour permettre un assemblage dudit module 1 avec un module 1 identique avec engagement imbriqué mutuel des parois 3, 3' de leurs alvéoles 2 respectives, au niveau de fentes 4 en regard, qui sont présentes au moins au niveau des parois 3, 3' susceptibles de se croiser lors d'un empilement imbriqué avec emboîtement l'un dans l'autre de deux modules 1, un tel empilement avec imbrication mutuelle sur toute l'épaisseur de deux modules 1 aboutissant à une pièce composite 18 présentant un nombre de parois 3, 3' double par rapport à un module 1 seul et avec les faces opposées 5 et 5' des deux modules 1 imbriqués, qui sont coplanaires deux à deux.

Ainsi, grâce à l'invention, les modules 1 peuvent être empilés avec imbrication mutuelle deux par deux tout en n'occupant sensiblement que le volume d'un unique module 1 (cf. figures 4, 9 et 15). De ce fait, l'encombrement au stockage est divisé par deux (par rapport à l'état de la technique sans imbrication mutuelle) et en particulier la hauteur d'empilement de deux modules 1 superposés sera de ha et non pas de 2 x ha.

Comme indiqué, un compromis constructif idéal en termes de taille ou profondeur P des fentes 4 se situe autour de la valeur ha/2, de telle manière que les parois latérales 3, 3' concernées ne soient pas notablement fragilisées, mais que par ailleurs les faces opposées 5 et 5' des deux modules 1 soient respectivement coplanaires deux à deux à l'état imbriqué final des deux modules 1 lorsqu'ils forment ensemble une pièce composite 18 (confusion des plans 5 avec les plans 5').

Cette imbrication mutuelle sur toute leur épaisseur de deux modules 1 aboutit ainsi à une pièce composite 18 selon l'invention (constituée par exemple pour le stockage et le transport) présentant un nombre de parois 3, 3' double par rapport à un module 1 seul, et donc une résistance à l'écrasement et une surface de contact supérieure et inférieure également doublées.

D'après l'invention, chaque fente 4 est formée sensiblement au milieu de la paroi latérale 3, 3' correspondante et présente une largeur décroissante depuis son ouverture 4' jusqu'à son fond 4". De plus, la largeur If au niveau du fond 4" correspond sensiblement à l'épaisseur moyenne des parois latérales 3, 3' des alvéoles 2, l'ouverture 4' de chaque fente 4 étant avantageusement pourvue de bords biseautés ou arrondis 4‴ (facilite l'amorce de l'imbrication des modules).

Ces fentes 4 sont présentes au moins, et préférentiellement uniquement, au niveau des parois 3, 3' susceptibles de se croiser lors d'un empilement de deux modules 1.

Lors d'un tel empilement imbriqué, les orientations des faces 5 et 5' des deux modules 1 sont inversées l'une par rapport à l'autre, l'orientation relative des première et seconde extrémités 6, 6' entre elles pouvant quant à elle être inversée ou non (positionnement tête-bêche ou non).

De plus, en fonction de la forme et de l'arrangement des alvéoles 2, l'empilement imbriqué s'effectue avec ou sans décalage relatif des deux modules 1 concernés entre eux.

Avantageusement, chaque alvéole 2 comporte un nombre pair de parois latérales 3, 3' identiques, égal ou supérieur à quatre.

Ainsi, chaque alvéole 2 peut présenter une forme carrée et l'empilement s'effectue avec un décalage d'une demi-diagonale entre les deux modules 1 (lorsque les fentes 4 sont situées au milieu des parois latérales 3, 3').

Toutefois, en accord avec une forme de réalisation très préférée de l'invention, ressortant des figures 2 à 9 et 13 à 15 annexées, chaque alvéole 2 comporte six parois latérales 3, 3' et présente en section (selon un plan parallèle aux faces 5 et 5') une forme d'hexagone régulier.

Conformément à une construction pratique avantageuse, le module 1 présente une forme globale, c'est-à-dire une forme de son pourtour extérieur, sensiblement carrée ou rectangulaire et est avantageusement constitué d'au moins trois rangées R1, R2, R3, R4, Ri d'alvéoles hexagonales 2 accolées, décalées de la moitié d'une alvéole 2 entre rangées R1, R2, R3, R4, Ri voisines, alternativement dans des sens opposés, selon les directions d'alignement DA desdites rangées R1, R2, R3, R4, Ri.

Comme le montrent les figures 2 à 11 et 13 à 15, le nombre total d'alvéoles 2 par module 1, le nombre de rangées ou d'alignements Ri d'alvéoles 2 et le nombre d'alvéoles 2 par rangée Ri peuvent varier selon les réalisations, lesdites alvéoles 2 étant toujours décalées longitudinalement d'une demi-alvéole entre deux rangées Ri voisines.

En relation avec une recherche de préservation maximale de l'intégrité physique du module 1, il peut être prévu que les parois latérales 3, 3' des alvéoles 2 hexagonales situées dans un plan perpendiculaire aux directions d'alignement DA des rangées d'alvéoles R1, R2, R3, R4, Ri soient des parois pleines 9, dépourvues de fentes 4 (à l'exception le cas échéant des parois externes/extérieures 3' pourvues d'un moyen d'accrochage femelle 8', par exemple du type fente).

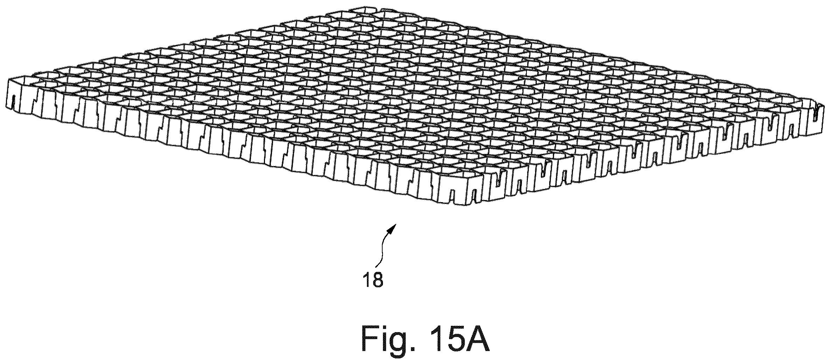

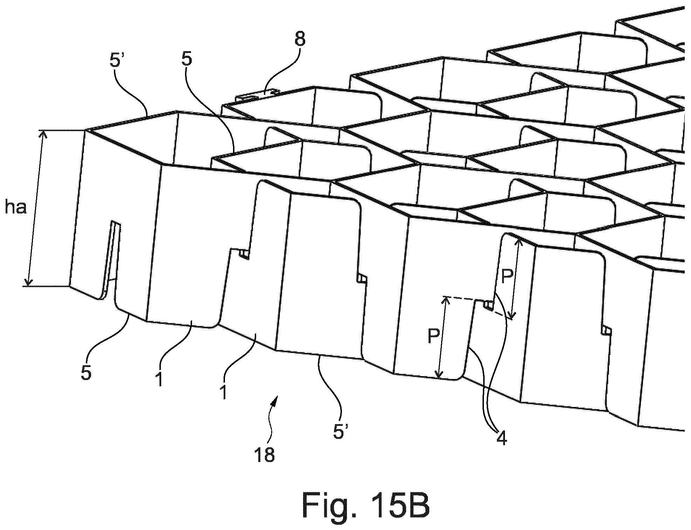

Plus généralement, toutes les parois 3, 3' d'un module 1, qui ne sont pas destinées à être sécantes avec les parois 3, 3' d'un autre module 1 lors d'un empilement avec retournement (figures 4 et 15A), peuvent être dépourvues de fentes 4, donc être des parois 9 pleines.

En vue d'aboutir à un calage avec blocage en position dans le plan horizontal d'une pluralité de modules 1 destinés à former ensemble une couche par assemblage coopérant dans un plan, il peut être prévu que le corps 1' en forme de plaque de chaque module 1 comporte, au niveau d'une première extrémité 6, une formation d'emboîtement mâle 7 et, au niveau d'une seconde extrémité 6', opposée à la première, une formation d'emboîtement femelle 7' complémentaire, avantageusement constituées respectivement d'une proéminence et d'un renfoncement correspondant à une moitié d'alvéole 2.

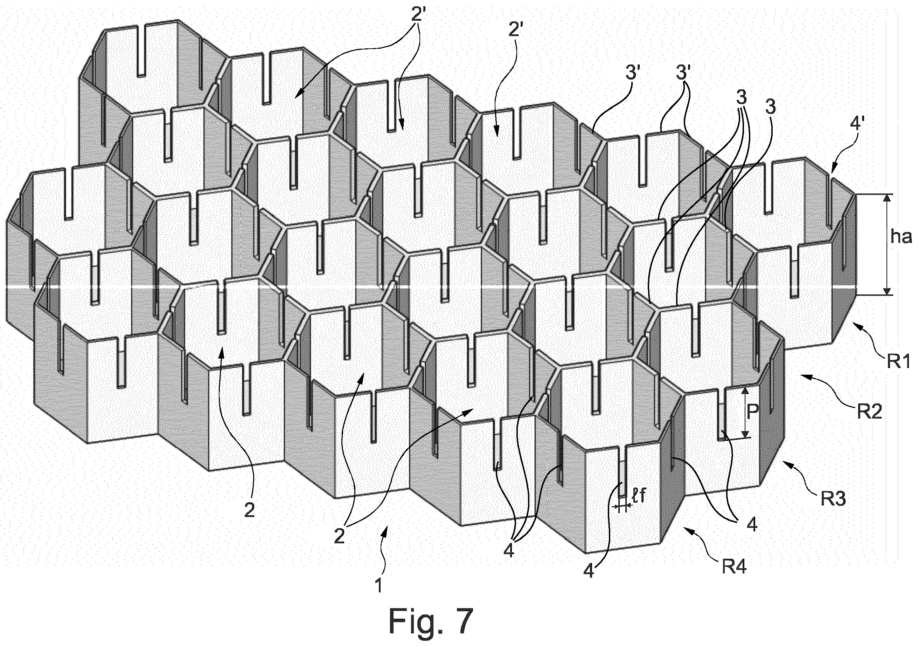

En fonction du nombre de rangées Ri d'alvéoles 2 formant chaque module 1, notamment pair (figures 7 à 11 et 13 à 15) ou impair (figures 2 à 6), l'arrangement en couche continue plane de modules 1 adjacents et coopérant par engagement de formes conjuguées périphériques, peut être obtenu avec ou sans décalage latéral entre modules 1 aboutants longitudinalement.

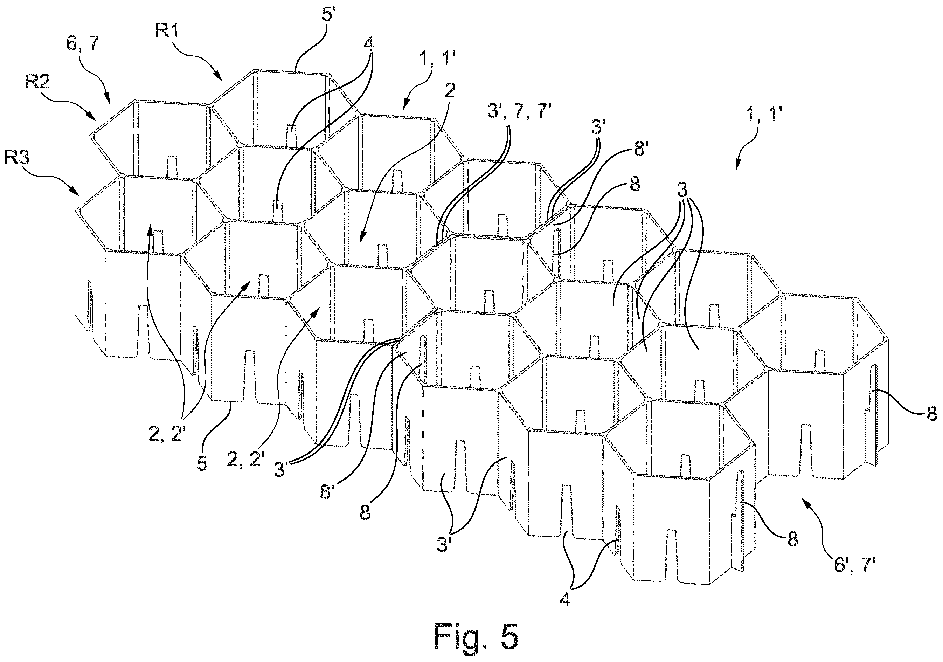

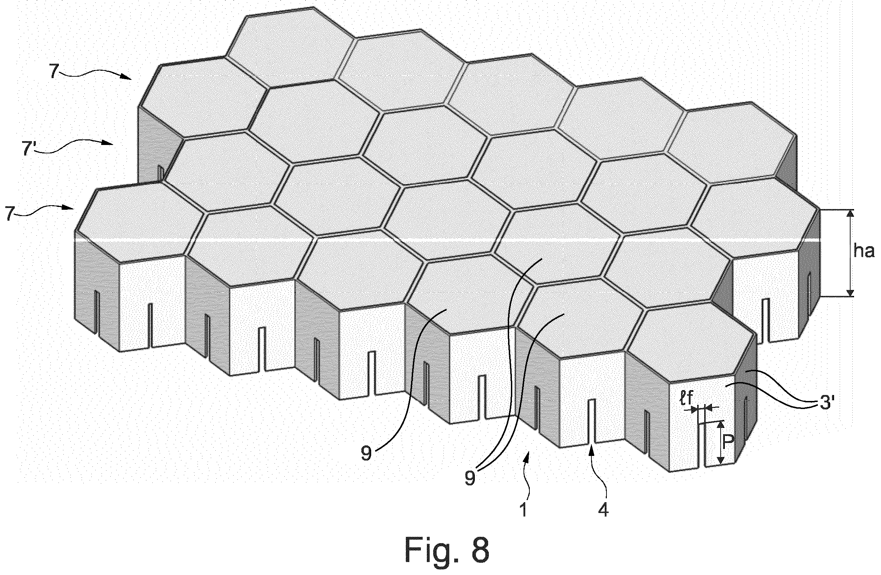

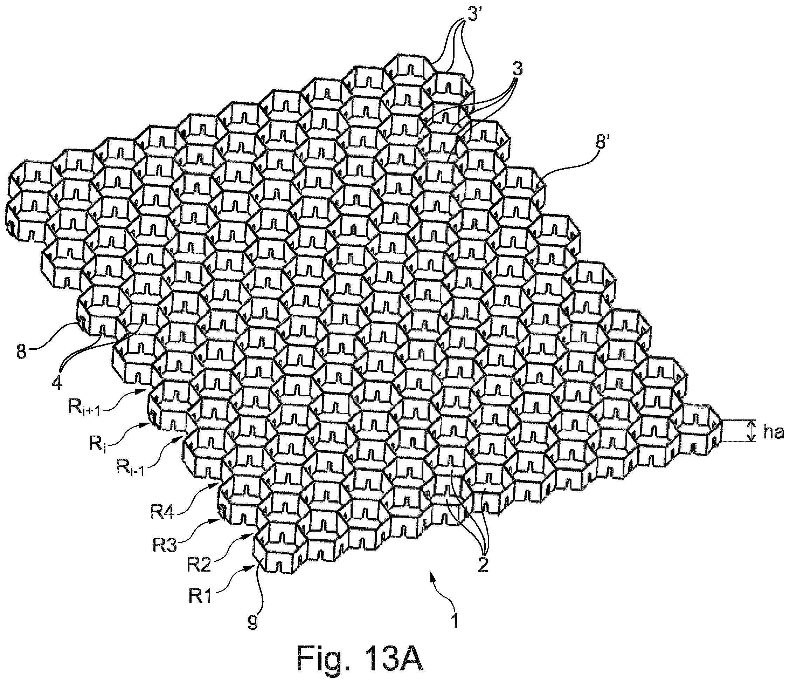

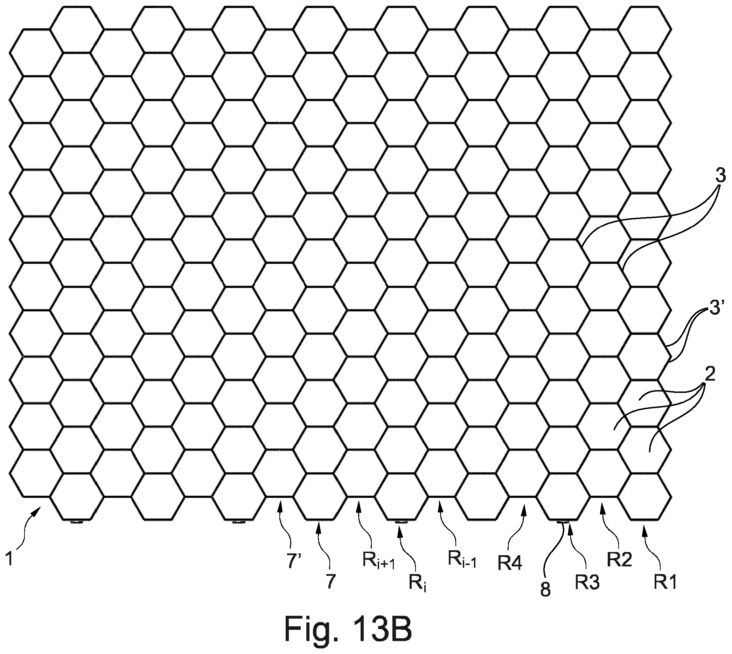

Les différentes rangées Ri d'alvéoles 2 (rangée Ri : alignement d'alvéoles 2 aboutantes reliées par une paroi 3 commune arrangée perpendiculairement à la direction longitudinale de la rangée considérée) peuvent présenter le même nombre d'alvéoles 2 (par exemple 6 : figure 5 ; par exemple 3 : figure 2) ou un nombre d'alvéoles différent d'une unité entre deux rangées voisines (par exemple alternativement 11 et 10 alvéoles : figures 13A et 13B ou alternativement 6 et 5 alvéoles 2 : figures 7 et 8).

De même, le nombre de rangées Ri peut être variable, en fonction le cas échéant de la taille variable des alvéoles 2, par exemple 3 (figures 2 et 5), 4 (figures 7 et 8) ou 16 (figures 13A et 13B).

Afin d'assurer le cas échéant un verrouillage de l'arrangement jointif en couche des modules 1, le corps 1' de chaque module 1 peut en outre comporter, au niveau d'une première extrémité 6, au moins un premier moyen d'accrochage 8 et, au niveau d'une seconde extrémité 6', opposée à la première, au moins un second moyen d'accrochage 8'. Ces deux types de moyens d'accrochage 8, 8', par exemple du type mâle/femelle, crochet/anse ou nervure/rainure, sont complémentaires et aptes et destinés à coopérer pour établir une liaison d'accrochage mécanique entre deux modules 1 aboutants. Lesdits premiers et seconds moyens d'accrochage 8 et 8' sont avantageusement formés d'un seul tenant avec la paroi périphérique du corps 1' du module 1, par exemple au niveau d'une proéminence 7 et d'un renfoncement 7' présents respectivement au niveau de ladite première 6 et de ladite seconde 6' extrémité.

Chaque moyen d'accrochage mâle 8 peut, par exemple, comme le montrent les figures 2 à 6 et 13 à 15, consister en un crochet formé sur la paroi 3', 9 externe d'une alvéole 2 d'un module 1, ladite alvéole 2 étant située à une extrémité d'une rangée Ri et formant proéminence 7 ou renfoncement 7'. Cette paroi 3', 9 est destinée à venir en contact avec une paroi 3' externe d'une alvéole 2 conjuguée formant renfoncement 7' ou proéminence 7 et appartenant à un autre module 1 aboutant longitudinalement au module 1 précédent et arrangée dans la continuité de ce dernier.

Ce crochet 8 est orienté vers le haut lorsque le module 1 est installé et peut s'étendre depuis la face 5 au niveau de la paroi extérieure 3' concernée.

Chaque moyen d'accrochage femelle 8' peut alors consister en une partie de la paroi externe 3' de l'alvéole 2 conjuguée précitée, comprenant, d'une part, une fente 4 et, d'autre part, une portion de paroi pleine surmontant ladite fente 4.

Ainsi, le crochet 8 pénètre dans l'alvéole 2 conjuguée et vient en prise d'accrochage bloquant avec la portion de paroi 8' pleine avec son extrémité libre.

Alternativement, ou additionnellement, le crochet 8 peut comprendre une portion de paroi plus large que la fente 8', venant en prise sur l'arrière de la paroi 3' concernée, autour de cette fente.

Comme évoqué précédemment, les formations sortante 7 et rentrante 7' correspondent avantageusement à une demi-alvéole.

Comme le montrent les figures 2, 4 à 6 et 13 à 15, les moyens d'accrochage mâles 8 sont formés sur une alvéole 2 formant proéminence 7 en bout d'une rangée Ri, par exemple au niveau d'une proéminence 7 sur deux sur un côté du module 1 en forme de plaque rectangulaire ou carrée.

Afin de ne pas générer de surépaisseur décalante lors d'un arrangement aboutant avec imbrication de formations sortante 7 et rentrante 7', il peut en outre être prévu que les parois latérales 3' des alvéoles 2 constituant le pourtour extérieur du corps 1' du module 1 présentent une épaisseur correspondant sensiblement à la moitié de l'épaisseur des autres parois latérales 3, non périphériques du corps en plaque 1' du module 1 (et communes à au moins deux alvéoles 2 adjacentes).

L'assemblage bout à bout dans un plan horizontal de deux modules 1 peut également être réalisé par aboutement (et accrochage) des formations sortantes ou proéminences 7 des deux côtés concernés des deux modules 1, les formations rentrantes ou renfoncements 7' en regard respectivement formant alors par coopération deux par deux une alvéole 2 intermédiaire supplémentaire.

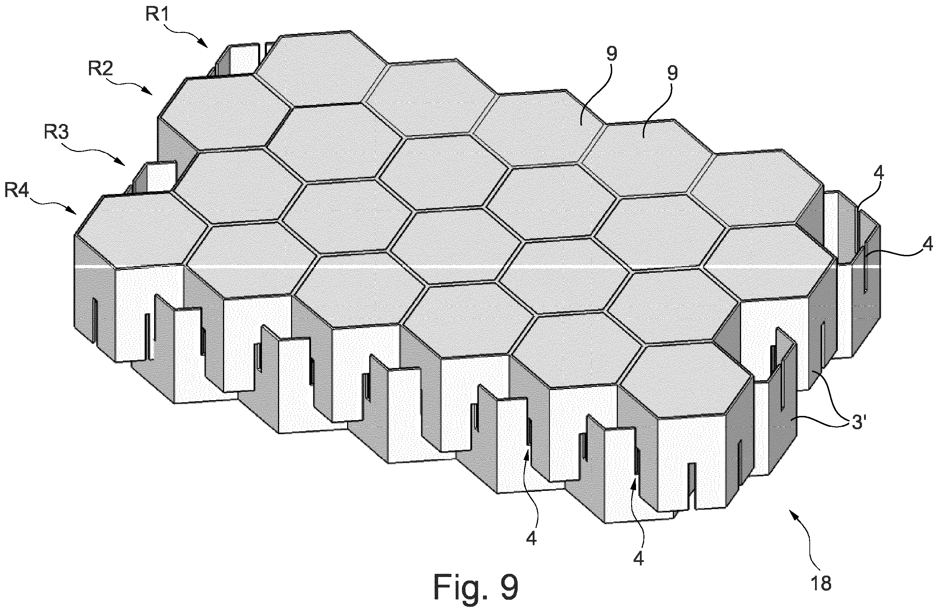

En accord avec une variante de réalisation, permettant d'avoir une structure plus rigide, offrant une surface d'appui plane et pleine et permettant de constituer des réserves d'eau (fonds d'alvéoles fermés), l'ensemble des ouvertures 2' des alvéoles 2 débouchant sur la face 5' du corps 1' en forme de plaque, sur laquelle les fentes 4 ne débouchent pas, sont obturées par des parois 9, définissant ensemble une surface pleine (figures 8 et 9).

Avantageusement, chaque module 1 consiste en une plaque alvéolée 1' formée d'un seul tenant par moulage par injection ou extrusion de matériau thermoplastique, tel que par exemple du polypropylène, du polyester, du polyamide ou du polychlorure de vinyle, de polycarbonate ou de métal, les fentes 4 étant réalisées lors du moulage ou par usinage postérieurement au moulage ou à l'extrusion.

Une telle pièce composite 18, qui intègre deux modules 1, présente un encombrement sensiblement similaire à celui d'un unique module 1. La mise en œuvre d'une telle pièce composite 18 (constituée temporairement) durant des phases de manipulation/transfert, de stockage et de transport permet ainsi de réduire de 50 % l'encombrement et les opérations de manutention.

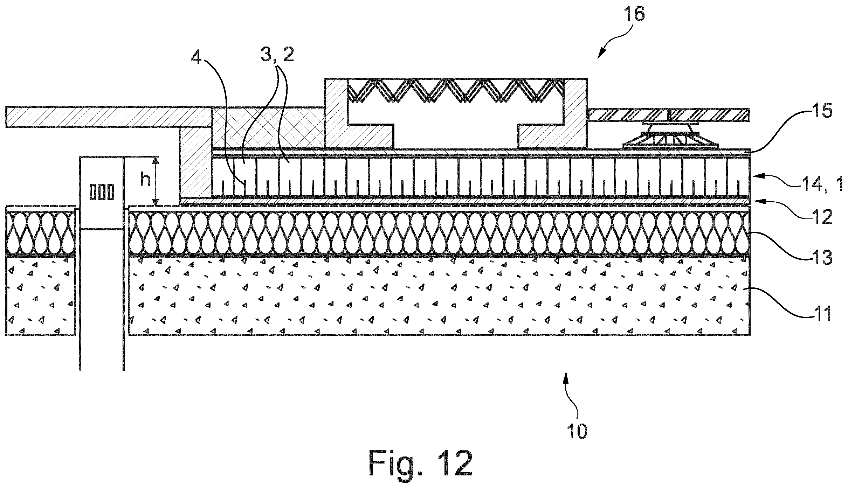

La figure 12 illustre un système de toiture-terrasse 10 comprenant un support plan 11 étanche ou revêtu d'une membrane d'étanchéité 12, éventuellement avec interposition d'une couche isolante 13.

Ce système 10 comporte également une couche 14 formée par l'assemblage aboutant de modules 1 à structure alvéolaire en forme de plaques tels que décrits précédemment, cette couche 14 formant couche drainante et/ou couche de rétention d'eau en fonction de l'orientation, vers le haut et vers le bas, des faces 5 et 5', et donc des fentes 4 des modules 1.

Dans le cas de la formation d'une couche de rétention d'eau (fentes 4 dirigées vers le haut), le volume retenu sera régulé par les fentes 4 faisant office de moyens de déversement de trop-plein, et donc une fonction de drainage en sus.

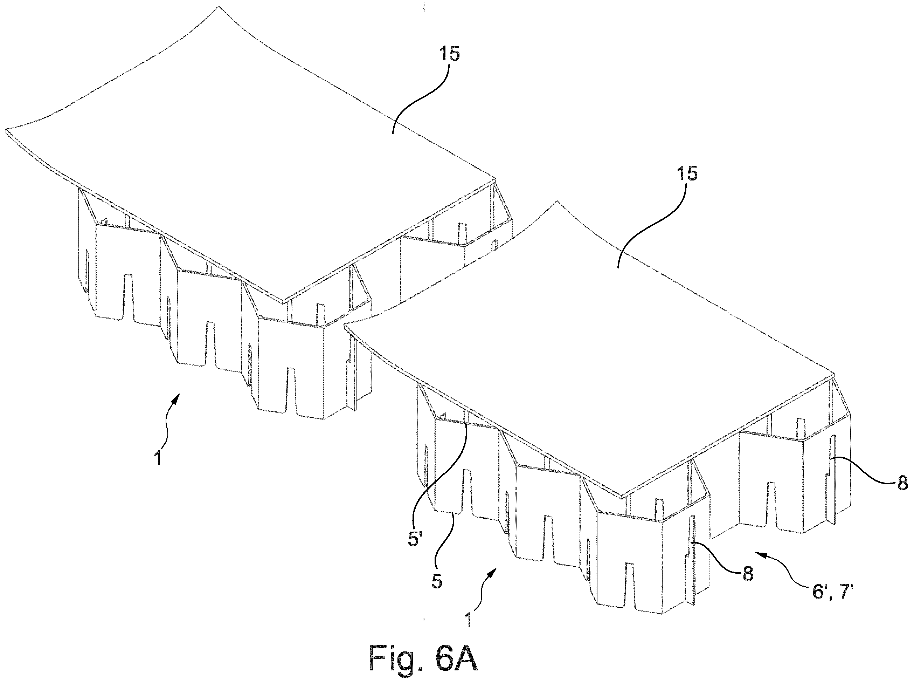

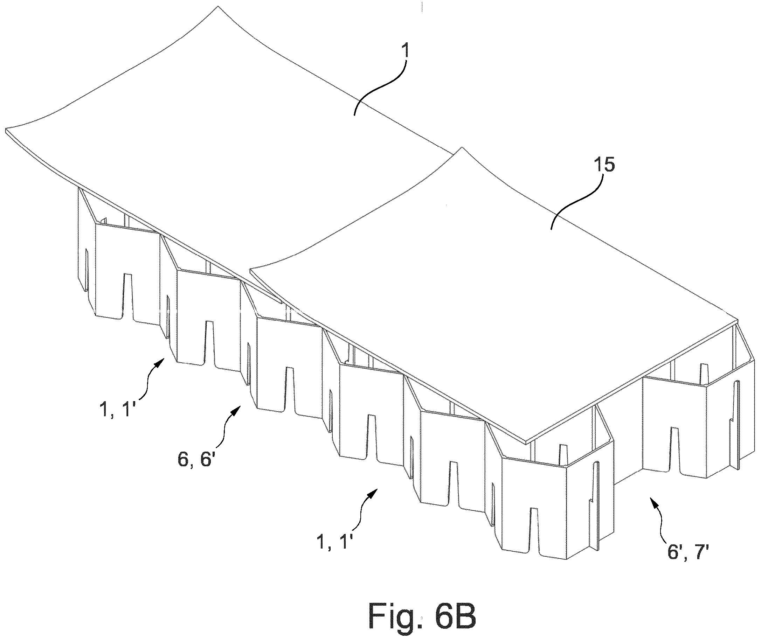

Comme le montrent les figures 6A et 6B, en relation aussi avec la figure 1, la couche 14 de modules 1 peut être recouverte d'un voile 15, par exemple du type non tissé, formant filtre sur lequel est par exemple disposé une couche 16 de protection, éventuellement mécanique.

Les différentes portions de voile 15 seront avantageusement partiellement chevauchantes au niveau de leurs bords qui se touchent.

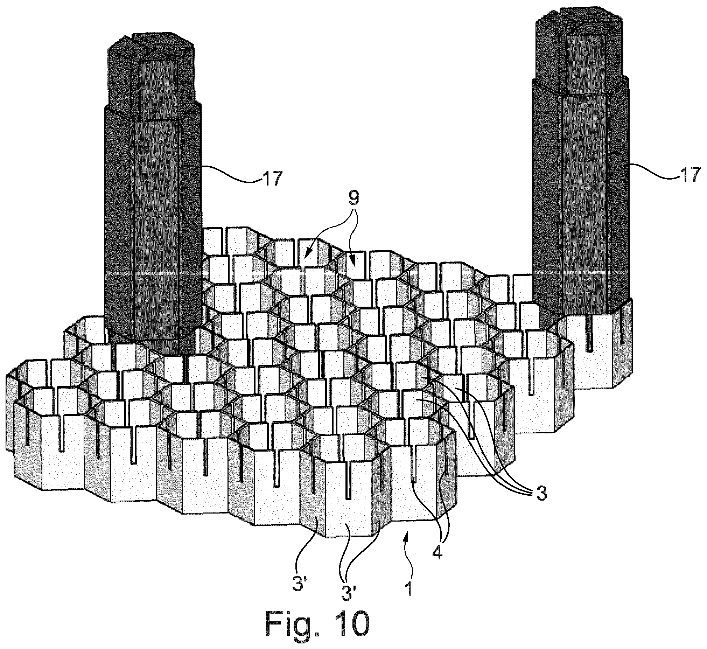

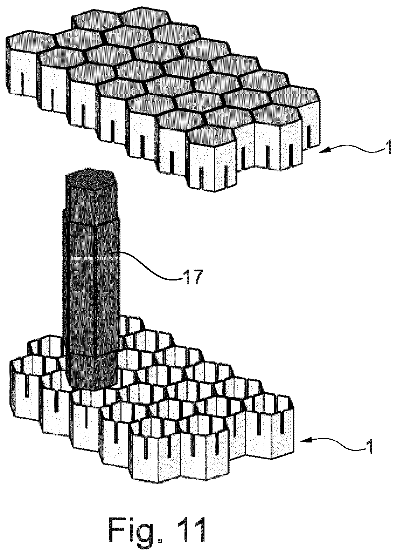

Afin de pouvoir créer des volumes vides plus importants, le système 10 peut comprendre au moins deux modules 1 mutuellement espacés et reliés entre eux par au moins un moyen d'entretoisement ou de piétage 17, sous la forme d'un pilier creux emboîté dans des alvéoles 2 en regard des deux modules 1 (figures 10 et 11). Avantageusement, le système 10 comprendra deux couches de modules 1, dont les différents éléments constituants respectifs sont espacés par des moyens 17.

Enfin, selon un autre aspect, l'invention vise aussi un procédé amélioré de conditionnement de modules 1 tels que décrits ci-dessus, notamment en vue de leur stockage et/ou de leur transport.

Ce procédé consiste essentiellement à assembler ces modules 1 deux par deux par emboîtement avec imbrication mutuelle, au niveau de fentes 4 coïncidentes et opposées, de leurs parois 3, 3' qui s'entrecroisent après mise en regard des deux modules 1 considérés par leurs faces 5 sur lesquelles débouchent lesdites fentes 4 et avec superposition des rangées Ri d'alvéoles 2 respectives mutuellement décalées d'une demi-alvéole (cf. figures 4, 9, 14 et 15).

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention comme définie par les revendications annexées.

## Revendications

1. Pièce composite (18) constituée de deux modules (1) à structure alvéolaire, notamment en nid d'abeilles,
chaque module (1) consistant en un corps en forme de plaque grillagée (1') à mailles tubulaires (2) identiques et mutuellement accolées, constituant autant d'alvéoles, lesdites alvéoles (2) présentant une forme polyédrique avec une section polygonale, et des parois latérales (3, 3') de hauteur ci-après désignée par l'abréviation ha,
et pour chaque module (1) :
- au moins certaines des parois latérales (3, 3') des alvéoles (2), communes à deux alvéoles (2) ou non, comportent des découpes (4) en forme de fentes s'étendant depuis une face (5) de la plaque (1') jusqu'à au moins mi-hauteur de la paroi (3, 3') concernée,
- la profondeur (P) des fentes (4) se situe autour de ha/2, en étant préférentiellement égale ou légèrement supérieure à ha/2,
- lesdites fentes (4) sont configurées et agencées pour permettre un assemblage dudit module (1) avec un module (1) identique avec engagement imbriqué mutuel des parois (3, 3') de leurs alvéoles (2) respectives, au niveau de fentes (4) en regard, qui sont présentes au moins au niveau des parois (3, 3') susceptibles de se croiser lors d'un empilement imbriqué avec emboîtement l'un dans l'autre de deux modules (1),
- chaque fente (4) est formée sensiblement au milieu de la paroi latérale (3, 3') correspondante d'un module (1)**,**
**caractérisée en ce que**
- chaque fente présente une largeur (lf) décroissante depuis son ouverture (4') jusqu'à son fond (4"), et
- la largeur (lf) au niveau du fond (4") correspond sensiblement à l'épaisseur moyenne des parois latérales (3, 3') des alvéoles (2),
- ladite pièce composite (18) est constituée par un tel empilement avec imbrication mutuelle sur toute leur épaisseur de deux modules (1) présentant une hauteur égale à ha et un nombre de parois (3, 3') double par rapport à un module (1) seul, les faces opposées (5 et 5') des deux modules (1) étant coplanaires deux à deux.

2. Pièce composite selon la revendication 1, **caractérisée en ce que** l'ouverture (4') de chaque fente (4) est pourvue de bords biseautés ou arrondis (4‴).

3. Pièce composite selon l'une quelconque des revendications 1 et 2, **caractérisée en ce que** chaque alvéole (2) d'un module (1) comporte six parois latérales (3, 3') et présente en section une forme d'hexagone régulier.

4. Pièce composite selon l'une quelconque des revendications 1 à 3, **caractérisée en ce que** chaque module (1) présente une forme globale, c'est-à-dire une forme de son pourtour extérieur, sensiblement carrée ou rectangulaire et **en ce qu'**il est constitué d'au moins trois rangées (R1, R2, R3, R4, Ri) d'alvéoles hexagonales (2) accolées, décalées de la moitié d'une alvéole (2) entre rangées (R1, R2, R3, R4, Ri) voisines, alternativement dans des sens opposés, selon les directions d'alignement (DA) desdites rangées (R1, R2, R3, R4, Ri).

5. Pièce composite selon l'une quelconque des revendications 3 et 4, **caractérisée en ce que** les parois latérales (3, 3') des alvéoles (2) hexagonales d'un module (1) situées dans un plan perpendiculaire aux directions d'alignement (DA) des rangées d'alvéoles (R1, R2, R3, R4, Ri) sont des parois pleines, dépourvues de fentes (4).

6. Pièce composite selon l'une quelconque des revendications 1 à 5, **caractérisée en ce que** le corps en forme de plaque (1') de chaque module (1) comporte, au niveau d'une première extrémité (6), au moins un premier moyen d'accrochage (8) et, au niveau d'une seconde extrémité (6'), opposée à la première, au moins un second moyen d'accrochage (8'), ces deux types de moyens d'accrochage (8, 8'), par exemple du type mâle/femelle, crochet/anse ou nervure/rainure, étant complémentaires et aptes et destinés à coopérer pour établir une liaison d'accrochage mécanique entre deux modules (1) aboutants, lesdits premiers et seconds moyens d'accrochage (8 et 8') étant avantageusement formés d'un seul tenant avec la paroi périphérique du corps (1') du module (1), par exemple au niveau d'une proéminence (7) et d'un renfoncement (7') présents respectivement au niveau de ladite première (6) et de ladite seconde (6') extrémité.

7. Pièce composite selon l'une quelconque des revendications 1 à 6, **caractérisée en ce que** les parois latérales (3') des alvéoles (2) constituant le pourtour extérieur du corps (1') du module (1) présentent une épaisseur correspondant sensiblement à la moitié de l'épaisseur des autres parois latérales (3), non périphériques du corps en plaque (1') du module (1).

8. Pièce composite selon l'une quelconque des revendications 1 à 7, **caractérisée en ce que** toutes les ouvertures (2') des alvéoles (2) d'un module (1) débouchant sur la face (5') du corps (1') en forme de plaque, sur laquelle les fentes (4) ne débouchent pas, sont obturées par des parois (9), définissant ensemble une surface pleine.

9. Pièce composite selon l'une quelconque des revendications 1 à 7, **caractérisée en ce que** chaque module (1) consiste en une plaque alvéolée (1') formée d'un seul tenant par moulage par injection ou extrusion de matériau thermoplastique, tel que par exemple du polypropylène, du polyester, du polyamide ou du polychlorure de vinyle, de polycarbonate ou de métal, les fentes (4) étant réalisées lors du moulage ou par usinage postérieurement au moulage ou à l'extrusion.

10. Procédé de conditionnement de modules (1) sous forme de pièces composites (18) selon l'une quelconque des revendications 1 à 9, notamment en vue de leur stockage et/ou de leur transport, **caractérisé en ce qu'**il consiste à assembler ces modules (1) deux par deux par emboîtement avec imbrication mutuelle sur toute leur épaisseur, au niveau de fentes (4) coïncidentes et opposées, de leurs parois (3, 3') qui s'entrecroisent après mise en regard des deux modules (1) considérés par leurs faces (5) sur lesquelles débouchent lesdites fentes (4) et avec superposition des rangées (Ri) d'alvéoles (2) respectives mutuellement décalées d'une demi-alvéole.

## Patentansprüche

1. Zusammengesetztes Teil (18), das aus zwei Modulen (1) mit einer zellförmigen Struktur, insbesondere einer Wabenstruktur, gebildet ist,
wobei jedes Modul (1) aus einem gitterplattenförmigen Körper (1') mit identischen und wechselseitig verbundenen röhrenförmigen Maschen (2) besteht, die Waben bilden, wobei die Waben (2) eine polyedrische Form mit polygonalem Querschnitt und Seitenwände (3, 3') mit einer Höhe, die nachfolgend mit der Abkürzung ha bezeichnet wird, aufweisen und wobei bei jedem Modul (1):
- mindestens gewisse der Seitenwände (3, 3') der Waben (2), die zwei Waben (2) gemein sind oder nicht, Ausschnitte (4) in Form von Schlitzen umfassen, die sich von einer Seite (5) der Platte (1') bis zu mindestens der halben Höhe der betroffenen Wand (3, 3') erstrecken,
- die Tiefe (P) der Schlitze (4) etwa ha/2 beträgt und vorzugsweise gleich oder leicht größer als ha/2 ist,
- die Schlitze (4) dazu konfiguriert und eingerichtet sind, ein Zusammenfügen des Moduls (1) mit einem identischen Modul (1) mit wechselseitigem verschachtelten Eingriff der Wände (3, 3') ihrer jeweiligen Waben (2) im Bereich gegenüberliegender Schlitze (4) zu gestatten, welche mindestens in den Wänden (3, 3') vorhanden sind, die sich bei einer verschachtelten Stapelung von zwei Modulen (1), die ineinander gesteckt werden, kreuzen können,
- jeder Schlitz (4) im Wesentlichen in der Mitte der entsprechenden Seitenwand (3, 3') eines Moduls (1) gebildet ist,
**dadurch gekennzeichnet, dass**
- jeder Schlitz von seiner Öffnung (4') bis zu seinem Boden (4") eine abnehmende Breite (1f) aufweist und
- die Breite (1f) am Boden (4") im Wesentlichen der mittleren Dicke der Seitenwände (3, 3') der Waben (2) entspricht,
- das zusammengesetzte Teil (18) aus einer solchen Stapelung von zwei über ihre gesamte Breite wechselseitig verschachtelten Modulen (1) gebildet ist, die eine Höhe gleich ha und, im Vergleich zu einem einzigen Modul (1), eine doppelte Anzahl von Wänden (3, 3') aufweist, wobei die entgegengesetzten Seiten (5 und 5') der zwei Module (1) paarweise komplanar sind.

2. Zusammengesetztes Teil nach Anspruch 1, **dadurch gekennzeichnet, dass** die Öffnung (4') jedes Schlitzes (4) über abgeschrägte oder abgerundete Kanten (4‴) verfügt.

3. Zusammengesetztes Teil nach einem der Ansprüche 1 und 2, **dadurch gekennzeichnet, dass** jede Wabe (2) eines Moduls (1) sechs Seitenwände (3, 3') umfasst und im Querschnitt eine Form eines regelmäßigen Sechsecks aufweist.

4. Zusammengesetztes Teil nach einem der Ansprüche 1 bis 3, **dadurch gekennzeichnet, dass** eine globale Form jedes Moduls (1), das heißt eine Form seines Außenumfangs, im Wesentlichen quadratisch oder rechteckig ist und dass es aus mindestens drei miteinander verbundenen Reihen (R1, R2, R3, R4, Ri) von sechseckigen Waben (2) gebildet ist, die, gemäß den Ausrichtungsrichtungen (DA) der Reihen (R1, R2, R3, R4, Ri) und abwechselnd in entgegengesetzten Richtungen, zwischen benachbarten Reihen (R1, R2, R3, R4, Ri) um eine halbe Wabe (2) versetzt sind.

5. Zusammengesetztes Teil nach einem der Ansprüche 3 und 4, **dadurch gekennzeichnet, dass** die Seitenwände (3, 3') der sechseckigen Waben (2) eines Moduls (1), die sich in einer Ebene senkrecht zu den Ausrichtungsrichtungen (DA) der Wabenreihen (R1, R2, R3, R4, Ri) befinden, durchgehende Wände ohne Schlitze (4) sind.

6. Zusammengesetztes Teil nach einem der Ansprüche 1 bis 5, **dadurch gekennzeichnet, dass** der plattenförmige Körper (1') jedes Moduls (1) an einem ersten Ende (6) mindestens ein erstes Befestigungsmittel (8) und an einem zweiten Ende (6') entgegengesetzt zu dem ersten mindestens ein zweites Befestigungsmittel (8') umfasst, wobei diese zwei Typen von Befestigungsmitteln (8, 8'), beispielsweise vom Typ Steck-/Aufnahmeteil, Haken/Schlaufe oder Rippe/Nut, komplementär und dazu fähig und bestimmt sind, zusammenzuwirken, um eine mechanische Befestigungsverbindung zwischen zwei aneinandergefügten Modulen (1) herzustellen, wobei das erste und das zweite Befestigungsmittel (8 und 8') vorteilhafterweise mit der Umfangswand des Körpers (1') des Moduls (1) einstückig ausgebildet sind, beispielsweise an einem Vorsprung (7) und einer Einbuchtung (7'), die jeweils an dem ersten (6) und dem zweiten (6') Ende vorhanden sind.

7. Zusammengesetztes Teil nach einem der Ansprüche 1 bis 6, **dadurch gekennzeichnet, dass** die Seitenwände (3') der Waben (2), die den Außenumfang des Körpers (1') des Moduls (1) bilden, eine Dicke aufweisen, die im Wesentlichen der Hälfte der Dicke der anderen Seitenwände (3), die sich nicht am Umfang des plattenförmigen Körpers (1') des Moduls (1) befinden, entspricht.

8. Zusammengesetztes Teil nach einem der Ansprüche 1 bis 7, **dadurch gekennzeichnet, dass** alle Öffnungen (2') der Waben (2) eines Moduls (1), die auf der Seite (5') des plattenförmigen Körpers (1') münden, an der die Schlitze (4) nicht münden, durch Wände (9) verschlossen sind, die zusammen eine durchgehende Oberfläche definieren.

9. Zusammengesetztes Teil nach einem der Ansprüche 1 bis 7, **dadurch gekennzeichnet, dass** jedes Modul (1) aus einer Wabenplatte (1') besteht, die durch Spritzgießen oder Extrudieren von thermoplastischem Material, wie etwa beispielsweise Polypropylen, Polyester, Polyamid oder Polyvinylchlorid, von Polycarbonat oder Metall einstückig gebildet ist, wobei die Schlitze (4) während des Gießens oder durch eine Bearbeitung nach dem Gießen oder dem Extrudieren hergestellt werden.

10. Verfahren zur Konditionierung von Modulen (1) in Form von zusammengesetzten Teilen (18) nach einem der Ansprüche 1 bis 9, insbesondere zum Zwecke ihrer Lagerung und/oder ihres Transports, **dadurch gekennzeichnet, dass** es darin besteht, diese Module (1) paarweise durch Ineinanderstecken ihrer sich kreuzenden Wände (3, 3') mit wechselseitiger Verschachtelung über ihre gesamte Dicke an zusammenfallenden und entgegengesetzten Schlitzen (4) zusammenzufügen, nachdem die zwei betrachteten Module (1) an ihren Seiten (5), an denen die Schlitze (4) münden, einander gegenüberliegend angeordnet wurden und die jeweiligen Reihen (Ri) von Waben (2) um eine halbe Wabe wechselseitig versetzt übereinandergelegt wurden.

## Claims

1. Composite component (18) constituted of two modules (1) with a cellular structure, in particular a honeycomb structure,
each module (1) consisting of a body in the form of a meshwork plate (1') with identical and mutually adjoining tubular meshes (2), constituting the same number of cells, said cells (2) having a polyhedral shape with a polygonal section, and lateral walls (3, 3') of height denoted below by the abbreviation ha, and for each module (1) :
- at least some of the lateral walls (3, 3') of the cells (2), common to two cells (2) or otherwise, have cutouts (4) in the form of slots extending from one face (5) of the plate (1') to at least halfway up the wall (3, 3') in question,
- the depth (P) of the slots (4) is around ha/2, preferentially being equal to or slightly greater than ha/2,
- said slots (4) are configured and arranged to allow assembly of said module (1) with an identical module (1) with mutual interlocked engagement of the walls (3, 3') of their respective cells (2), at facing slots (4), which are present at least at the walls (3, 3') that are likely to intersect during interlocked stacking with nesting in one another of two modules (1),
- each slot (4) is formed substantially in the middle of the corresponding lateral wall (3, 3') of a module (1),
**characterized in that**
- each slot has a width (1f) decreasing from its opening (4') to its bottom (4"), and
- the width (1f) at the bottom (4") corresponds substantially to the average thickness of the lateral walls (3, 3') of the cells (2),
- said composite component (18) is constituted by such stacking with mutual interlocking over their entire thickness of two modules (1) having a height equal to ha and a number of walls (3, 3') that is double that of a module (1) alone, the opposite faces (5 and 5') of the two modules (1) being coplanar in pairs.

2. Composite component according to Claim 1, **characterized in that** the opening (4') of each slot (4) is provided with bevelled or rounded edges (4‴).

3. Composite component according to either one of Claims 1 and 2, **characterized in that** each cell (2) of a module (1) has six lateral walls (3, 3') and has in section a regular hexagon shape.

4. Composite component according to any one of Claims 1 to 3, **characterized in that** each module (1) has an overall shape, i.e. a shape of its outer perimeter, which is substantially square or rectangular and **in that** it is constituted of at least three rows (R1, R2, R3, R4, Ri) of adjoining hexagonal cells (2), offset by half a cell (2) between neighbouring rows (R1, R2, R3, R4, Ri), alternately in opposite directions, along the directions of alignment (DA) of said rows (R1, R2, R3, R4, Ri).

5. Composite component according to either one of Claims 3 and 4, **characterized in that** the lateral walls (3, 3') of the hexagonal cells (2) of a module (1) that are situated in a plane perpendicular to the directions of alignment (DA) of the rows of cells (R1, R2, R3, R4, Ri) are solid walls, devoid of slots (4).

6. Composite component according to any one of Claims 1 to 5, **characterized in that** the body in the form of a plate (1') of each module (1) has, at a first end (6), at least one first attachment means (8) and, at a second end (6'), which is opposite the first, at least one second attachment means (8'), these two types of attachment means (8, 8'), which are for example of the male/female, hook/loop or rib/groove type, being complementary and able and intended to cooperate to establish a mechanical attachment connection between two abutting modules (1), said first and second attachment means (8 and 8') being advantageously formed in one piece with the peripheral wall of the body (1') of the module (1), for example at a protuberance (7) and a recess (7') that are present respectively at said first end (6) and said second end (6').

7. Composite component according to any one of Claims 1 to 6, **characterized in that** the lateral walls (3') of the cells (2) constituting the outer perimeter of the body (1') of the module (1) have a thickness corresponding substantially to half the thickness of the other, non-peripheral lateral walls (3) of the plate-shaped body (1') of the module (1).

8. Composite component according to any one of Claims 1 to 7, **characterized in that** all the openings (2') of the cells (2) of a module (1) opening onto the face (5') of the body (1') in the form of a plate, onto which the slots (4) do not open, are closed off by walls (9), together defining a solid surface.

9. Composite component according to any one of Claims 1 to 7, **characterized in that** each module (1) consists of a cellular plate (1') formed in one piece by moulding by injection or extrusion of thermoplastic material, such as for example polypropylene, polyester, polyamide or polyvinyl chloride, polycarbonate or metal, the slots (4) being made during moulding or by machining after moulding or extrusion.

10. Method for packaging modules (1) in the form of composite components (18) according to any one of Claims 1 to 9, in particular with a view to their storage and/or transport, **characterized in that** it consists in assembling these modules (1) in pairs by nesting with mutual interlocking over their entire thickness, at coincident and opposite slots (4), of their walls (3, 3') that are interlaced after the two modules (1) under consideration have been placed facing each other via their faces (5) onto which said slots (4) open and with superposition of the respective rows (Ri) of cells (2) that are mutually offset by a half-cell.
